# EUROPÄISCHE PATENTSCHRIFT

(11) **EP 2 875 381 B1**
(45) Veröffentlichungstag und Bekanntmachung des Hinweises auf die Patenterteilung: **20.09.2017**
(21) Anmeldenummer: 13734710.0
(22) Anmeldetag: 29.06.2013
(51) Int. Cl.: B60R 16/03, G01S 7/40

(54) **VERFAHREN ZUR BESTIMMUNG DER FUNKTIONSFÄHIGKEIT EINES SCHALTBAREN EMPFANGSVERSTÄRKERS**
METHOD FOR DETERMINING THE FUNCTIONALITY OF A SWITCHABLE RECEIVING AMPLIFIER
PROCÉDÉ DE DÉTERMINATION DE LA FONCTIONNALITÉ D'UN AMPLIFICATEUR DE RÉCEPTION COMMUTABLE

(30) Priorität: 18.07.2012 DE 102012106506
(43) Veröffentlichungstag der Anmeldung: 27.05.2015
(73) Patentinhaber: Hella KGaA Hueck & Co, 59552 Lippstadt (DE)
(72) Erfinder: HESSE, Thomas, 33098 Paderborn (DE)
(86) Internationale Anmeldenummer: PCT/EP2013/063755
(87) Internationale Veröffentlichungsnummer: WO 2014/012772

(56) Entgegenhaltungen:
- WO-A1-00/28349
- DE-A1-102005 053 442
- US-A- 4 529 150
- US-A- 4 538 150
- US-A1- 2009 019 531
- US-A1- 2009 195 321

## Beschreibung

Die Erfindung betrifft ein Verfahren zur Bestimmung der Funktionsfähigkeit eines schaltbaren Empfangsverstärkers, gemäß dem Oberbegriff von Anspruch 1. Weiterhin betrifft die Erfindung auch eine Vorrichtung zur Bestimmung der Funktionsfähigkeit eines schaltbaren Empfangsverstärkers, gemäß dem Oberbegriff von Anspruch 9.

### Stand der Technik

Aus der DE10 2009 047 931 A1 ist ein Verfahren zur Bestimmung von Abstand und Relativgeschwindigkeit eines entfernten Objektes bekannt, wobei zur Bestimmung dieser Größen ein Radarsystem mit einer Sendeeinheit, einer Empfangseinheit und einem spannungsgesteuerten Oszillator zum Einsatz kommt. Die Sendeeinheit strahlt dabei ein Signal ab, wobei das Echo auf das Signal von der Empfangseinheit empfangen wird. Aus dem empfangenen Signal kann dann durch eine Signalanalyse der Abstand und die Relativgeschwindigkeit eines entfernten Objektes ermittelt werden. Im Falle, dass das empfangene reflektierte Signal zu schwach für eine Analyse sein sollte ist es Stand der Technik, dieses Signal durch einen schaltbaren Empfangsverstärker zu verstärken. Es hat sich allerdings als nachteilig herausgestellt, dass die Funktionsfähigkeit des schaltbaren Empfangsverstärkers lediglich über eine Plausibilisierung der Empfangssignale erfolgen kann. Dies bedeutet, dass im Falle einer fehlerhaften Verstärkung eines ausreichend starken Empfangssignals das Signal übersteuert wird, was zu einem Defekt des gesamten Radarsystems führen kann. Im umgekehrten Fall, d. h. wenn der Empfangsverstärker fehlerhaft bei einem empfangsschwachen Signal nicht eingeschaltet wird, kann sich die Reichweite der Detektion eines entfernten Objektes durch das Radarsystem wesentlich verringern. Ein anderes Verfahren zur zur Bestimmung der Funktionsfähigkeit eines schaltbaren Empfangsverstärkers eines Radarsystems ist in US4538150 offenbart.

### Offenbarung der Erfindung

Es ist Aufgabe der vorliegenden Erfindung, ein Verfahren und eine Vorrichtung zur Bestimmung der Funktionsfähigkeit eines schaltbaren Empfangsverstärkers eines Radarsystems bereitzustellen, wobei das Verfahren und die Vorrichtung messtechnisch einfach und zuverlässig aufgebaut sind, was eine schnelle und genaue Bestimmung der Funktionsfähigkeit der Schaltbarkeit des Empfangsverstärkers ermöglicht.

Zur Lösung dieser Aufgabe wird ein Verfahren mit den Merkmalen des Anspruches 1 sowie eine Vorrichtung mit den Merkmalen des Anspruches 9 vorgeschlagen, insbesondere mit den Merkmalen des jeweiligen kennzeichnenden Teils. In den abhängigen Ansprüchen sind bevorzugte Weiterbildungen ausgeführt. Dabei können die in den Ansprüchen und in der Beschreibung erwähnten Merkmale jeweils für sich oder in Kombination erfindungswesentlich sein. Merkmale und Details, die im Zusammenhang mit dem erfindungsgemäßen Verfahren beschrieben sind, gelten dabei selbstverständlich auch im Zusammenhang mit der erfindungsgemäßen Vorrichtung und umgekehrt. Dabei können die in den Ansprüchen und in der Beschreibung erwähnten Merkmale jeweils einzeln oder in Kombination erfindungswesentlich sein.

Die Erfindung offenbart ein Verfahren zur Bestimmung der Funktionsfähigkeit der Schaltbarkeit eines Empfangsverstärkers, eines Radarsystems mit einer Sendeeinheit, einer Empfangseinheit und einem spannungsgesteuerten Oszillator, wobei vor der Inbetriebnahme des Radarsystems eine Kalibrierung zur Kompensation einer Frequenzabweichung der abgegebenen Frequenz des Oszillators erfolgt. Erfindungsgemäß ist hierbei vorgesehen, dass während der Kalibrierung mindestens ein Kalibrierzyklus mit mindestens einem ersten Signal mit einer ersten Frequenz und einem zweiten Signal mit einer zweiten Frequenz durchlaufen wird. Dabei wird das erste Signal und das zweite Signal durch die Sendeeinheit gesendet. Die gesendeten Signale werden durch eine Empfangseinheit empfangen, wobei die empfangenen Signale im Basisband durch einen Empfangsverstärker verstärkt werden können. Der Empfangsverstärker wird mit einer Schaltsequenz geschaltet, wodurch das erste und das zweite Signal eine Amplitudenmodulation erfährt. Diese Amplitudenmodulation wird dann zur Bestimmung der Funktionsfähigkeit des Empfangsverstärkers herangezogen. Der Vorteil dieses Verfahrens liegt in der expliziten Bestimmung der Funktionsfähigkeit des Empfangsverstärkers durch bestimmbare gesendete Signale. Bestimmbar in diesem Zusammenhang bedeutet, dass die Signale und die Aufprägung von Amplitudenmodulation auf diesen Signalen über ein Regelwerk gesteuert werden. Während bei Radarsystemen des Standes der Technik zumindest ein Teil der Empfangseinheiten während der Kalibrierung genutzt werden muss, ist dies bei dem erfindungsgemäßen Radarsystems nicht der Fall. Die Kalibrierung des erfindungsgemäßen Radarsystems erfolgt durch eine direkte Analyse des abgegebenen Signals der Sendeeinheit. Dadurch wird erreicht, dass die Empfangseinheit zur Kalibrierung der Sendesignale nicht herangezogen werden muss. Dennoch liegen an der Empfangseinheit die ausgesendeten Signale der Sendeeinheit an, welche zur weiteren Analyse und Bestimmung der Funktionsfähigkeit des Empfangsverstärkers herangezogen wird. Das empfangene Signal der Sendeeinheit wird durch eine Schaltsequenz des Empfangsverstärkers amplitudenmoduliert. Dieses amplitudenmodulierte Signal kann dann unabhängig von der eigentlichen Kalibrierung der Sendeeinheit zu einer Analyse herangezogen werden, um die Funktionsfähigkeit des schaltbaren Empfangsverstärkers festzustellen. Damit kann unabhängig von der Kalibrierung der Sendeeinheit eine explizite Überprüfung der Schaltbarkeit des Empfangsverstärkers erfolgen. Es ist ebenfalls vorteilhaft, dass durch das erfindungsgemäße Verfahren und der erfindungsgemäßen Vorrichtung gleichzeitig eine Kalibrierung der Sendeeinheit und eine explizite Überprüfung der Schaltbarkeit des Empfangsverstärkers erfolgen kann.

Die Kalibrierung des Oszillators hat im Wesentlichen zwei Aufgaben. Die erste Aufgabe besteht in einer Kompensation einer Frequenzdrift des Oszillators, welche vorwiegend bedingt ist durch mögliche Temperaturänderungen im laufenden Betrieb. Auch andere Effekte, wie beispielsweise Loadpulling oder Alterung können dadurch bedacht werden. Die Kompensation der Frequenzdrift ist erforderlich, um ein Überschreiten der jeweils vorgegebenen Frequenzbandgrenzen unter allen Umständen zu vermeiden. Sie erfolgt durch eine Anpassung des Tuning-Spannungsbereiches des Oszillators. Die zweite Aufgabe besteht in einer Kompensation einer nichtlinearen Kennlinie des Oszillators.

Besonders vorteilhaft ist es, dass die Sendeeinheit an einen digitalen Signalprozessor gekoppelt ist, wobei der digitale Signalprozessor das erste und zweite Signal digital vorgibt. Die digitale Vorgabe von zu sendenden Signalen ermöglicht z.B. eine numerische Frequenzbestimmung des ausgesendeten Signals. Dies erfolgt bereits vorteilhaft während der Kalibrierung, wo das ausgesendete Signal des Oszillators über einen Frequenzteiler zu einem Frequenzzähler übermittelt wird, wobei das dort empfangene Signal wieder digital darstellbar ist. Dadurch wird es dem digitalen Signalprozessor ermöglicht, die Frequenz des gesendeten Signal zu erfassen. Dies kann auf digitaler Ebene durch einen Komparator geschehen oder durch Umwandlung der digitalen Werte in numerische Werte, bevorzugt in dezimal oder hexadezimaler Darstellung.

Es ist vorteilhaft, dass die Ansteuerung des spannungsgesteuerten Oszillators durch einen Digital-Analog-Wandler erfolgt. Damit kann eine genaue Einstellung der zu sendenden Frequenz durch die Sendeeinheit erfolgen. Zudem kann das Einstellen mehrerer einzelner Digital-Analog-Wandler-Werte bei einer Frequenz von z. B. 24 GHz einfach und effektiv erfolgen. Zudem ist die Vorgabe von genauen Zeitintervallen, von z. B. einer Millisekunde pro ausgestrahlter Frequenz über den Oszillator genau einhaltbar.

Weiterhin ist es vorteilhaft, dass die Empfangseinheit über einen Analog-Digital-Wandler an dem digitalen Signalprozessor gekoppelt ist, wobei das Empfangssignal über den Analog-Digital-Wandler digitalisiert wird. Die Abbildung des analogen Wertes in einen digitalen Wert ermöglicht einen einfachen numerischen oder digitalen Vergleich mit dem ausgesendeten Signal. Auch die Analyse des empfangenen Signals zur Bestimmung der Entfernung oder der Relativgeschwindigkeit eines Objektes kann dadurch auf digitaler oder numerischer Ebene erfolgen. Dadurch kann vorteilhafterweise die Analyse über eine Rechnereinheit erfolgen.

Es ist vorteilhaft, dass die Aussendung des ersten und zweiten Signals durch den Oszillator periodisch wiederholt wird. Dadurch können Messfehler statistisch, z. B. durch Bildung eines Mittelwertes bereinigt werden. Da die Umgebung, in der das Radarsystem eingesetzt wird, während der Kalibrierung sich ändern kann, z. B. durch Nutzung des Radarsystems in einem Kraftfahrzeug, können unbeabsichtigte Reflektionen des Sendesignals an Objekten, welche durch die Empfangseinheit empfangen werden, ebenfalls bereinigt werden. Damit kann der Anteil der Schaltsequenz in dem Empfangssignal exakter herausgefiltert werden. Die Überlagerung von unbeabsichtigt reflektierten Signalen in das Empfangssignal und der durch die Schaltsequenz erzeugten Amplitudenmodulation, können dadurch einfacher voneinander getrennt werden.

Es ist weiterhin vorteilhaft, dass die Schaltfrequenz des Empfangsverstärkers durch den digitalen Signalprozessor gesteuert wird. Der digitale Signalprozessor, welcher eine Rechnereinheit sein kann, kann dabei in Übereinstimmung mit dem eingestellten digitalen Wert an dem Digitalanalogwandler den Empfangsverstärker schalten. Damit wird es dem digitalen Signalprozessor ebenfalls ermöglicht, die Schaltsequenz in einem Kalibrierzyklus vorzugeben. Es kann dadurch den analogen Empfangssignalen eine Frequenz aufgeprägt werden, die z. B. 20 kHz betragen kann. Dies bedeutet, eine Einschalt- und Abschaltdauer von 25 µs. Damit beträgt die Periodendauer der Schaltsequenz 50 µs.

Zudem ist es vorteilhaft, dass das erzeugte erste und zweite Signal des spannungsgesteuerten Oszillators über einen Frequenzzähler erfasst wird. Die Nutzung eines Frequenzzählers ermöglicht es, die analogen Signale zur Einbeziehung der digitalen oder numerischen Analyse durch den digitalen Signalprozessor heranzuziehen. Ein Vergleich der eingestellten Frequenz des digitalen Signalprozessors durch den Digital-Analog-Wandler zu dem Oszillator mit dem abgegebenen Signal des Oszillators kann dadurch auf numerischer Ebene erfolgen.

Die Nutzung der Empfangseinheiten während der Kalibrierung kann dadurch unterbleiben.

Besonders vorteilhaft ist es, dass durch eine Fast-Fourier-Transformation die Amplitudenmodulation in den Frequenzbereich abgebildet und dadurch die Schaltsequenz des Empfangsverstärkers detektiert wird. Damit kann die Amplitudenmodulation, verursacht durch die Schaltsequenz des Empfangsverstärkers, mit Hilfe digitaler Signalverarbeitung detektiert werden. Die Abbildung des Zeitbereiches in den Frequenzbereich durch eine Fouriertransformation stellt dabei eine einfache Möglichkeit dar, die Schaltsequenz über eine Rechnereinheit zu ermitteln. Hierbei kann eine reellwertige Fast-Fourier-Transformation mit z. B. der Länge 512 zur Anwendung kommen. Damit besitzt das generierte Betragsspektrum 256 Stellen, wobei die höchste Stelle bei einer Abtastrate von 40 kHz einer Frequenz von 20 kHz entspricht. Genau an dieser Stelle des Betragsspekrums kann in Form eines Peaks der durch den Empfangsverstärker bedingte Signalanteil erkennbar werden.

Die erfindungsgemäße Aufgabe wird ebenfalls gelöst durch eine Vorrichtung zur Bestimmung der Funktionsfähigkeit eines Empfangsverstärkers eines Radarsystems gemäß dem Patentanspruch 9. Das Radarsystem weist dabei eine Sendeeinheit, eine Empfangseinheit und einen spannungsgesteuerten Oszillator auf, wobei vor der Inbetriebnahme des Radarsystems eine Kalibrierung zur Kompensation einer Frequenzabweichung der abgegebenen Frequenz des Oszillators erfolgt. Dazu ist erfindungsgemäß vorgesehen, dass während der Kalibrierung des Oszillators mindestens ein Kalibrierzyklus mit mindestens einem ersten Signal mit einer ersten Frequenz und einem zweiten Signal mit einer zweiten Frequenz durchlaufbar ist. Das erste Signal und das zweite Signal ist durch die Sendeeinheit sendbar und durch die Empfangseinheit empfangbar. Der Empfangsverstärker ist mit einer Schaltsequenz geschaltet, welche zu einer Amplitudenmodulation des ersten und zweiten Signals führt. Dabei ist die Amplitudenmodulation zur Bestimmung der Funktionsfähigkeit des Empfangsverstärkers heranziehbar.

Weitere Maßnahmen und Vorteile der Erfindung ergeben sich aus den Ansprüchen der nachfolgenden Beschreibung und den Zeichnungen. Dabei können die in den Ansprüchen und der Beschreibung erwähnten Merkmale jeweils einzeln für sich oder in beliebiger Kombination erfindungswesentlich sein. Es zeigen:
- Fig. 1: einen schematischen Aufbau eines Radarsystems,
- Fig. 2: ein schematisches Diagramm mit einem ersten und einem zweiten Signal,
- Fig. 3: ein schematisches Diagramm einer Schaltsequenz,
- Fig. 4: ein schematisches Diagramm eines Empfangssignals bei einer aktivierten Schaltsequenz,
- Fig. 5: ein schematisches Diagramm eines Empfangssignal bei einer aktivierten Schaltsequenz in einer hohen Auflösung und
- Fig. 6: ein schematisches Diagramm eines Beitragsspektrums eines Signals einer Empfangseinheit.

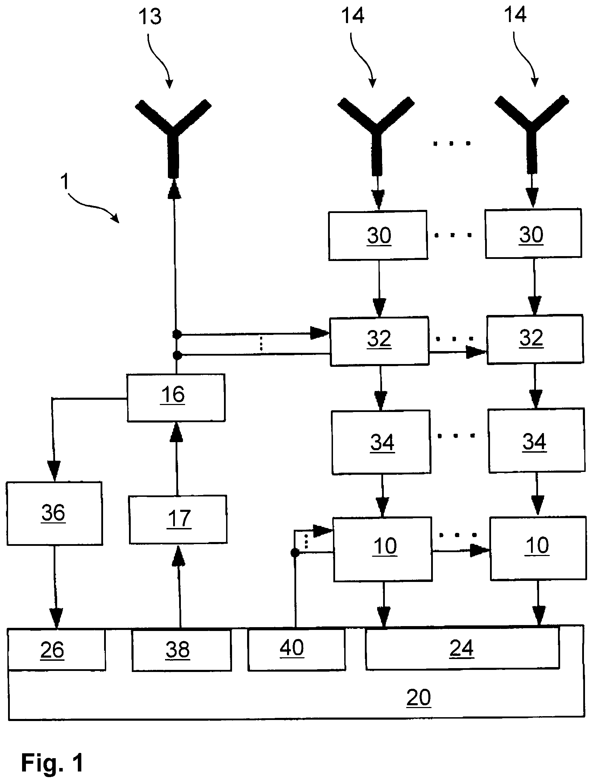

In Figur 1 ist schematisch der Aufbau eines Radarsystems dargestellt. Eine Sendeeinheit 13 weist einen spannungsgesteuerten Oszillator 16 auf, wobei zur Kalibrierung des Radarsystems 1 ein erstes Signal 11 mit einer ersten Frequenz und ein zweites Signal 12 mit einer zweiten Frequenz von der Sendeeinheit 13 gesendet werden kann. Der Oszillator 16 wird dabei über einen Digital-Analog-Wandler 17 angesteuert, welcher wiederum über eine Schnittstelle 38 eines digitalen Signalprozessors 20 angesteuert wird. Das erste 11 und das zweite Signal 12 des Oszillators 16 wird über einen Frequenzteiler 36 einen in dem digitalen Signalprozessor 20 eingebauten Frequenzzähler 26 zugeführt. Damit wird es dem digitalen Signalprozessor 20, welches eine Rechnereinheit sein kann, ermöglicht, das abgegebene erste 11 und zweite Signal 12 des Oszillators 16 über das durch den Frequenzzähler 26 empfangene Signal zu analysieren. Der Kalibrierzyklus mit seinem ersten 11 und seinem zweiten Signal 12, erfüllt dabei im Wesentlichen zwei Aufgaben. Die erste Aufgabe besteht in einer Kompensation einer Frequenzdrift des Oszillators 16, welche vorwiegend bedingt sein kann durch eine Temperaturänderung im laufenden Betrieb. Die Frequenzdrift des Oszillators 16 kann aber auch durch andere Effekte, wie beispielsweise Loadpulling oder Alterung entstehen. Eine Kompensation der Frequenzdrift ist dabei erforderlich, um ein Überschreiten der jeweils vorgegebenen Frequenzbandgrenzen unter allen Umständen zu vermeiden. Sie kann durch eine Anpassung des Tuning-Spannungsbereiches des Oszillators 16, bzw. der entsprechenden Digitalwerte des Digital-Analog-Wandlers 17 in einem Kalibrierzyklus erfolgen. Die zweite Aufgabe besteht in einer Kompensation einer nichtlinearen Kennlinie des Oszillators 16. Dabei kann von den Radarsystemen das LFMSK-Sendeverfahren vorgesehen werden. Dieses LFMSK-Sendeverfahren sieht ein verschachteltes Senden von drei Teilsignalen A, B und C vor, wobei jedes der drei Teilsignale einen Frequenzverlauf mit äquidistanten Frequenzstufen vorsieht. Die Einhaltung dieser konstanten Abstände zwischen zwei benachbarten Frequenzen eines Teilsignals, ist von imminenter Bedeutung für die Zieldetektion. Aufgrund der Nichtlinearität der Oszillatorkennlinie (Frequenz über Tuningspannung) ergeben sich für das Einstellen äquidistanter Frequenzstufen nicht-äquidistante Tuningspannungen bzw. Digital-Analog-Wandler-Werte. Diese müssen in jedem Kalibrierzyklus für jede der einzustellenden Sendefrequenzen neu berechnet werden, da der Verlauf der Oszillatorkennlinie von vielen Faktoren, wie beispielsweise Temperatur, Loadpulling oder Alterung abhängen kann und sich somit im laufenden Betrieb permanent ändert. Dabei wird deutlich, dass während der Kalibrierzyklen eine Empfangseinheit 14 des Radarsystems 1 zwar vorhanden und funktionsfähig sind, aber nicht für die Kalibrierung des Oszillators 16 benötigt werden. Damit kann zumindest ein Teil der Empfangseinheiten 14 während der Kalibrierung genutzt werden, um die Funktionsfähigkeit eines Empfangsverstärkers 10 zu bestimmen. Die Signale, die von der Sendeeinheit 13 gesendet werden, können über Empfangseinheiten 14 empfangen werden. Das durch die Empfangseinheiten 14 aufgenommene Signal, wird über eine erste Verstärkerstufe 30 (Low Noise Amplifier, LNA) zu einem Mischer 32 geführt. Dort entsteht durch kohärente Mischung mit dem Oszillatorausgangssignal ein Basisbandsignal, dessen Amplitudenverlauf bei einem idealen Mischer allein durch die Phasenlage des Empfangssignals relativ zum Oszillatorsignal bestimmt ist. Die sich an dem Mischer 32 anschließende Analogfilterung ist als Bandpass 34 ausgelegt zur Unterdrückung von höher frequenten Rauschanteilen einerseits sowie von niederfrequenten, parasitären Mischprodukten andererseits. Die Analogfilterung kann als Analogschaltung in dem Empfangsverstärker 10 integriert sein. Der Empfangsverstärker 10 dient dem Zweck einer Erhöhung der Empfängerdynamik, in dem beispielsweise bei einer drohenden Übersteuerung der Empfangseinheit 14 durch sehr starke Signale die Verstärkung auf einen geringeren Wert reduziert werden kann. Es können zwei Verstärkungsfaktoren implementiert sein, wobei die Umschaltung über eine separate Steuerleitung 40 erfolgt, welche durch ein General-Purpose-10-Pin (GPIO) des digitalen Signalprozessors 20 getrieben werden kann. Der Unterschied zwischen einer hohen und einer geringen Verstärkung kann etwa 17 dB entsprechen. Über einen Analog-Digital-Wandler 24, welcher in dem digitalen Signalprozessor 20 integriert sein kann, werden die analogen empfangenen Signale über die Empfangseinheit 14 in digitale Werte umgewandelt. Der Analog-Digital-Wandler 24 kann dabei z. B. eine Auflösung von 12 Bit haben.

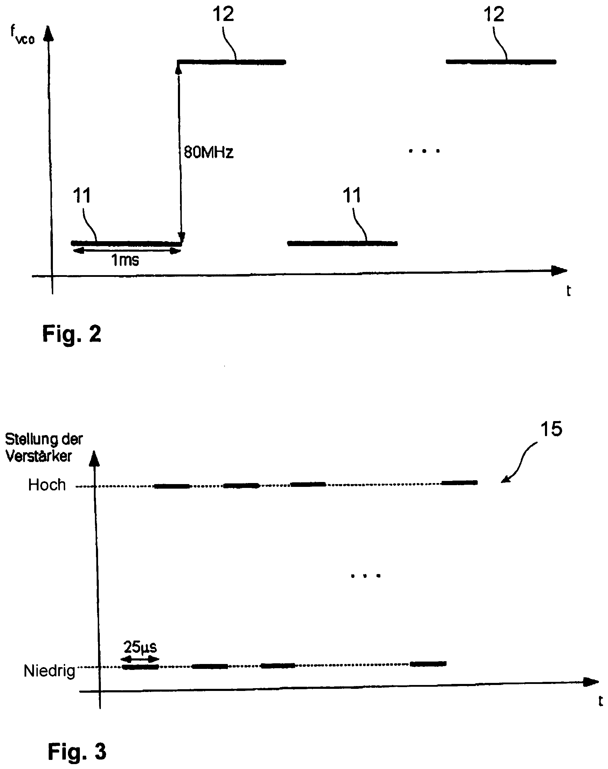

In Figur 2 ist schematisch ein Diagramm eines ersten Signals 11 und eines zweiten Signals 12 dargestellt. Die Zeitdauer des ersten Signals 11 und des zweiten Signals 12 beträgt dabei eine Millisekunde. Der Frequenzabstand des ersten Signals 11 von dem zweiten Signal 12 beträgt dabei 80 MHz. Dabei kann zur Kalibrierung ein Frequenzzählverfahren über den Frequenzzähler 26 eingesetzt werden, welches das Einstellen mehrerer einzelner Digital-Analog-Wandler-Werte bzw. Frequenzen bei z. B. 24 GHz vorsehen kann. Jede einzelne Frequenz wird dabei über eine Zeitdauer von z. B. einer Millisekunde konstant gehalten. In dieser Zeit erfolgt eine effiziente Zählung der dem eingestellten Digital-Anlog-Wandler-Wert entsprechenden Frequenz. Zur Erreichung der Kalibrierung sind eine Einstellung und anschließende Zählung mehrerer, über das Sendefrequenzband verteilter, sogenannter Stützfrequenzen innerhalb eines Kalibrierzyklus erforderlich. Dementsprechend geschieht auch eine gezielte Anregung der Empfangseinheiten 14 durch genau jene Signale, die in Kalibrierzyklen am Oszillator 16 eingestellt werden, konkret durch Signale mit Frequenzsprüngen, welche in der Größenordnung bis zu 80 MHz bei 100 MHz Bandbreite bzw. 180 MHz bei 200 MHz Bandbreite erfolgen können. Durch den Effekt des Mischerbias erfolgt eine direkte Einkoppelung des Sendesignals in die Empfangseinheiten 14 und verursacht dort auch in ungünstigen Situationen, in denen keine Radarziele vorhanden sind und folglich auch keine Signale über die Empfangseinheiten gelangen, dort dennoch Signale. Durch die Detektion dieser Signale kann auch in ungünstigen Situationen eine zuverlässige Diagnose der Empfangseinheiten bzgl. eines Kanalausfalls erfolgen. In einem Kalibrierzyklus kann nun in allen Umgebungssituationen Wechselsignale in die Empfängereinheiten 14 des Radarsystems 1 eingespeist werden, sodass Spannungsverläufe ungleich von null Volt am Ausgang der Bandpassfilter 34 der Empfangseinheiten 14 vorliegen können. Ein schnelles und gezieltes Schalten des Empfangsverstärkers 10 zwischen einer hohen und geringen Verstärkung, d. h. einer Schaltsequenz 15, verursacht eine entsprechende Amplitudenmodulation 18 der Ausgangssignale der Bandpassfilter 34.

In Figur 3 ist schematisch ein Diagramm einer Schaltsequenz 15 des Empfangsverstärkers 10 dargestellt. Das gezielte und schnelle Schalten des Empfangsverstärkers 10 verursacht eine Amplitudenmodulation. Dabei kann z. B. alle 25 µs ein Umschalten des Empfangsverstärkers 10 zwischen einer hohen und einer geringen Verstärkung erfolgen. Durch diesen Vorgang kann den analogen Empfangssignalen der verschiedenen Empfangseinheiten 14 jeweils ein Signalanteil mit einer Frequenz von 20 kHz aufgeprägt werden. Nun kann anhand der Detektion dieses Signalanteils in den Empfangseinheiten 14 der einzelnen Kanäle ein Rückschluss auf die Funktionsfähigkeit der jeweiligen Empfangsverstärker 10 geschlossen werden. Eine anschließende Verarbeitung der Empfangssignale, d. h. der digitalen Signale durch den Analog-Digital-Wandler 24, die dem digitalen Signalprozessor 20 dadurch zur Verfügung gestellt werden, kann damit einen Rückschluss auf die Funktionsfähigkeit der Empfangsverstärker 10 geben. Für die Zeitdauer des Anliegens der erläuterten Frequenzfolge und der beschriebenen Schaltsequenz 15, kann eine Abtastung der Empfangssignale mit einer Rate von 40 kHz erfolgen, sodass für jede Empfangseinheit 14 pro Verstärkerstellung ein Abtastwert vorliegt.

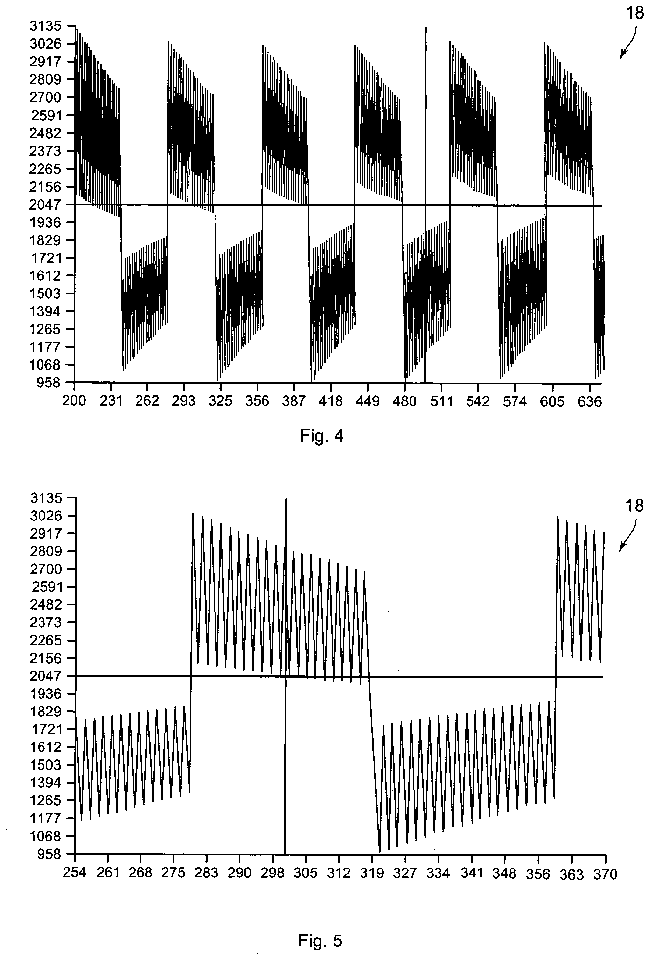

In Figur 4 ist schematisch ein Diagramm eines Empfangssignals bei einer aktivierten Schaltsequenz 15 dargestellt. Dieses Diagramm zeigt beispielhaft ein mögliches ermitteltes Signal einer Empfangseinheit 14 eines realen Radarsystems 1. Die Anregung des Empfangssignals durch die Empfangseinheit 14 erfolgte durch die in Figur 2 und Figur 3 erfolgten Signale bzw. Schaltsequenz 15. Dabei sind die Effekte der beiden genannten Anregungen deutlich zu erkennen. Einerseits ist der Anteil des Oszillatorsendesignals nach Figur 2 präsent, welches den langsam veränderlichen Signalanteil mit einer Periodendauer von 80 Abtastwerten bzw. einer Wiederholfrequenz von 500 Hz darstellt. Dieser Signalanteil moduliert andererseits den Anteil der Schaltsequenz der Empfangseinheiten 14, zu sehen mit einer Periodendauer von zwei Abtastwerten bzw. einer Wiederholfrequenz von 20 kHz. Figur 5 zeigt dabei schematisch das Empfangssignal bei aktivierter Schaltsequenz 15 in einer höheren zeitlichen Auflösung. Die Detektion dieses höher frequenten Signalanteils mit Hilfe digitaler Signalverarbeitung ermöglicht nun einen Rückschluss auf die Funktionsfähigkeit des Verstärkers und Schaltung in den Empfängerzweigen. Anhand der deutlichen Ausprägung dieses höher frequenten Signalanteils ist ersichtlich, dass die Detektion auf vielfache Art und Weise möglich ist.

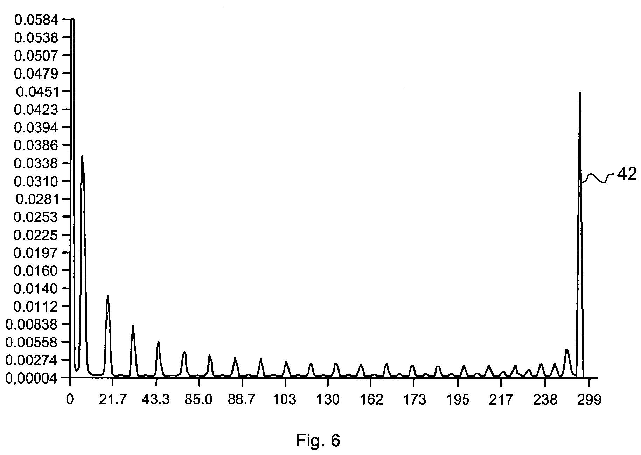

In Figur 6 ist schematisch ein Betragsspektrum eines Signals einer Empfängereinheit 14 dargestellt. Dieses Betragsspektrum stellt beispielhaft eine Detektion im Frequenzbereich dar. Dazu kann eine Fast Fourier-Transformation (FFT) zur Anwendung kommen. Die Anwendung einer reellwertigen FFT kann mit einer Länge 512 auf das Signal eines jeden Empfangseinheit 14 erfolgen. Der zu detektierende Signalanteil mit einer Frequenz von 20 kHz, welcher bereits in Figur 4 und Figur 5 klar zu erkennen war, ist auch im Betragssprektum in Figur 6 deutlich zu beobachten. Das durch eine FFT der Länge 512 generierte Betragsspektrum besitzt 256 Stellen, wobei die höchste Stelle bei einer Abtastrate von 40 kHz einer Frequenz von 20 kHz entspricht. Genau an dieser Stelle des Betragsspektrums ist in Form eines Peaks 42 der durch die Verstärkerumschaltung bedingte Signalanteil in Figur 6 erkennbar. Die weiteren Peaks sind dort allesamt durch den Signalanteil des Oszillatorsendesignals mit der Grundfrequenz 500 Hz und dessen Oberwellen sowie dessen Modulationsprodukten bedingt. Die Diagnose der Verstärkerumschaltung kann sich auf die Präsenzdetektion eines Peaks an der Stelle 256 des Betragsspektrums eines Empfangskanals konzentrieren. Damit kann es sowohl qualitativ als auch quantitativ sehr einfach möglich sein, signalverarbeitungstechnisch die Funktionsfähigkeit des Empfangsverstärkers 10 zu bestimmen.

## Patentansprüche

1. Verfahren zur Bestimmung der Funktionsfähigkeit eines schaltbaren Empfangsverstärkers (10) eines Radarsystems (1) mit einer Sendeeinheit (13), einer Empfangseinheit (14) und einem spannungsgesteuerten Oszillator (16), wobei vor der Inbetriebnahme des Radarsystems (1) eine Kalibrierung zur Kompensation einer Frequenzabweichung der abgegebenen Frequenz des Oszillators (16) erfolgt,
**dadurch gekennzeichnet,**
**dass** während der Kalibrierung des Oszillators mindestens ein Kalibrierzyklus mit mindestens einem ersten Signal mit einer ersten Frequenz (11) und einem zweiten Signal mit einer zweiten Frequenz (12) durchlaufen wird, wobei das erste Signal (11) und das zweite Signal (12) durch die Sendeeinheit (13) gesendet und durch die Empfangseinheit (14) empfangen wird, wobei der Empfangsverstärker (10) mit einer Schaltsequenz (15) geschaltet wird, welche zu einer Amplitudenmodulation (18) des ersten (11) und zweiten Signals (12) führt und die Amplitudenmodulation (18) zur Bestimmung der Funktionsfähigkeit des Empfangsverstärkers (10) herangezogen wird.

2. Verfahren nach Anspruch 1,
**dadurch gekennzeichnet,**
**dass** die Sendeeinheit (13) an einen digitalen Signalprozessor (20) gekoppelt ist, wobei der digitale Signalprozessor (20) das erste (11) und zweite Signal (12) digital vorgibt.

3. Verfahren nach Anspruch 1 oder 2,
**dadurch gekennzeichnet,**
**dass** die Ansteuerung des spannungsgesteuerten Oszillators (16) durch einen Digital-Analog-Wandler (17) erfolgt.

4. Verfahren nach Anspruch 1 bis 3,
**dadurch gekennzeichnet,**
**dass** die Empfangseinheit (14) über einen Analog-Digital-Wandler (24) an den digitalen Signalprozessor (20) gekoppelt ist, wobei das Empfangssignal über den Analog-Digital-Wandler (24) digitalisiert wird.

5. Verfahren nach einem der vorhergehenden Ansprüche,
**dadurch gekennzeichnet,**
**dass** die Aussendung des ersten (11) und zweiten Signals (12) durch den Oszillator (16) periodisch wiederholt wird.

6. Verfahren nach einem der vorhergehenden Ansprüche,
**dadurch gekennzeichnet,**
**dass** die Schaltfrequenz des Empfangsverstärkers (10) durch den digitalen Signalprozessor (20) gesteuert wird.

7. Verfahren nach einem der vorhergehenden Ansprüche,
**dadurch gekennzeichnet,**
**dass** das erzeugte erste (11) und zweite (12) Signal des spannungsgesteuerten Oszillators (16) über einen Frequenzzähler (26) erfasst wird.

8. Verfahren nach einem der vorhergehenden Ansprüche,
**dadurch gekennzeichnet,**
**dass** durch eine Fast-Fourier-Transformation die Amplitudenmodulation in den Frequenzbereich abgebildet und dadurch die Schaltfrequenz des Empfangsverstärkers (10) detektiert wird.

9. Vorrichtung zur Bestimmung der Funktionsfähigkeit eines schaltbaren Empfangsverstärkers (10) eines Radarsystems (1) mit einer Sendeeinheit (13), einer Empfangseinheit (14) und einem spannungsgesteuerten Oszillator (16), wobei vor der Inbetriebnahme des Radarsystems (1) eine Kalibrierung zur Kompensation einer Frequenzabweichung der abgegebenen Frequenz des Oszillators (16) erfolgt,
**dadurch gekennzeichnet,**
**dass** während der Kalibrierung des Oszillators mindestens ein Kalibrierzyklus mit mindestens einem ersten Signal mit einer ersten Frequenz (11) und einem zweiten Signal mit einer zweiten Frequenz (12) durchlaufen wird wobei das erste Signal (11) und das zweite Signal (12) durch die Sendeeinheit (13) gesendet wird und durch die Empfangseinheit (14) empfangen wird wobei der Empfangsverstärker (10) mit einer Schaltsequenz (15) geschaltet ist, welche zu einer Amplitudenmodulation (18) des ersten (11) und zweiten Signals (12) führt und die Amplitudenmodulation (18) zur Bestimmung der Funktionsfähigkeit des Empfangsverstärkers (10) herangezogen wird.

10. Vorrichtung nach Anspruch 9, die nach einem Verfahren nach Anspruch 1 bis 8 betreibbar ist.

## Claims

1. Procedure for determining the functionality of a switchable receiving amplifier (10) of a radar system (1) with a transmitting unit (13), a receiving unit (14) and a voltage-controlled oscillator (16), where a calibration to compensate for a deviation from the specified oscillator (16) frequency is carried out before commissioning the radar system (1),
**wherein,**
during oscillator calibration, at least one calibration cycle is run through with at least one first signal with a first frequency (11) and a second signal with a second frequency (12), where the first signal (11) and the second signal (12) are transmitted by the transmitting unit (13) and received by the receiving unit (14), where the receiving amplifier (10) is switched with a switching frequency (15), which is used for an amplitude modulation (18) of the first (11) and second signal (12), and the amplitude modulation (18) is used to determine the functionality of the receiving amplifier (10).

2. Procedure in accordance with Claim 1,
**wherein**
the transmitting unit (13) is coupled with a digital signal processor (20), where the digital signal processor (20) specifies the first (11) and second signal (12).

3. Procedure in accordance with Claim 1 or 2,
**wherein**
the voltage-controlled oscillator (16) is activated by a digital-analog converter (17).

4. Procedure in accordance with claims 1 through 3,
**wherein**
the receiving unit (14) is coupled with the digital signal processor (20) using an analog-digital converter (24), where the receive signal is digitalized by the analog-digital converter (24).

5. Procedure in accordance with one of the previous claims,
**wherein**
the oscillator (16) periodically repeats the emission of the first (11) and second signal (12).

6. Procedure in accordance with one of the previous claims,
**wherein**
the switching frequency of the receiving amplifier (10) is controlled by the digital processor (20).

7. Procedure in accordance with one of the previous claims,
**wherein**
the generated first (11) and second (12) signal of the voltage-controlled oscillator (16) are recorded by a frequency counter (26).

8. Procedure in accordance with one of the previous claims,
**wherein**
a fast Fourier transform maps the amplitude modulation in the frequency range, allowing the switching frequency of the receiving amplifier (10) to be detected.

9. Device for determining the functionality of a switchable receiving amplifier (10) of a radar system (1) with a transmitting unit (13), a receiving unit (14) and a voltage-controlled oscillator (16), where a calibration to compensate for a deviation from the specified oscillator (16) frequency is carried out before commissioning the radar system (1),
**wherein,**
during oscillator calibration, at least one calibration cycle is run through with at least one first signal with a first frequency (11) and a second signal with a second frequency (12), where the first signal (11) and the second signal (12) are transmitted by the transmitting unit (13) and received by the receiving unit (14), where the receiving amplifier (10) is switched with a switching frequency (15), which is used for an amplitude modulation (18) of the first (11) and second signal (12), and the amplitude modulation (18) is used to determine the functionality of the receiving amplifier (10).

10. Device in accordance with Claim 9, which can be operated using a procedure in accordance with claims 1 through 8.

## Revendications

1. Procédé de détermination de la fonctionnalité d'un amplificateur de réception commutable (10) d'un système radar (1) comprenant une unité d'émission (13), une unité de réception (14) et un oscillateur commandé par tension (16), un étalonnage étant effectué avant la mise en service du système radar (1) pour compenser un écart de fréquence de la fréquence délivrée par l'oscillateur (16),
**caractérisé en ce que**
pendant l'étalonnage de l'oscillateur au moins un cycle d'étalonnage est effectué avec au moins un premier signal à une première fréquence (11) et un deuxième signal à une deuxième fréquence (12), le premier signal (11) et le deuxième signal (12) étant émis par l'unité d'émission (13) et reçus par l'unité de réception (14), l'amplificateur de réception (10) étant commuté à une séquence de commutation (15) qui mène à une modulation d'amplitude (18) du premier signal (11) et du deuxième signal (12) et la modulation d'amplitude (18) étant utilisée pour déterminer la fonctionnalité de l'amplificateur de réception (10).

2. Procédé selon la revendication 1,
**caractérisé en ce que** l'unité d'émission (13) est couplée à un processeur de signal numérique (20), le processeur de signal numérique (20) déterminant digitalement le premier signal (11) et le deuxième signal (12).

3. Procédé selon la revendication 1 ou 2,
**caractérisé en ce que** la commande de l'oscillateur commandé par tension (16) s'effectue par un convertisseur numérique-analogique (17).

4. Procédé selon les revendications 1 à 3,
**caractérisé en ce que** l'unité de réception (14) est couplée au processeur de signal numérique (20) au moyen d'un convertisseur analogique-numérique (24), le signal de réception étant numérisé au moyen du convertisseur analogique-numérique (24).

5. Procédé selon l'une des revendications précédentes, **caractérisé en ce que** l'émission du premier signal (11) et du deuxième signal (12) par l'oscillateur (16) se répète périodiquement.

6. Procédé selon l'une des revendications précédentes, **caractérisé en ce que** la fréquence de commutation de l'amplificateur de réception (10) est commandée par le processeur de signal numérique (20).

7. Procédé selon l'une des revendications précédentes, **caractérisé en ce que** le premier signal (11) et le deuxième signal (12) générés de l'oscillateur commandé par tension (16) sont saisis par le biais d'un fréquencemètre (26).

8. Procédé selon l'une des revendications précédentes, **caractérisé en ce que** par le biais d'une transformée de Fourier rapide, la modulation d'amplitude est imagée dans la plage de fréquence et ainsi, la fréquence de commutation de l'amplificateur de réception (10) est détectée.

9. Dispositif pour déterminer la fonctionnalité d'un amplificateur de réception commutable (10) d'un système radar (1) comprenant une unité d'émission (13), une unité de réception (14) et un oscillateur commandé par tension (16), un étalonnage étant effectué avant la mise en service du système radar (1) pour compenser un écart de fréquence de la fréquence délivrée par l'oscillateur (16),
**caractérisé en ce que**
pendant l'étalonnage de l'oscillateur au moins un cycle d'étalonnage est effectué avec au moins un premier signal à une première fréquence (11) et un deuxième signal à une deuxième fréquence (12), le premier signal (11) et le deuxième signal (12) étant émis par l'unité d'émission (13) et reçus par l'unité de réception (14), l'amplificateur de réception (10) étant commuté à une séquence de commutation (15) qui mène à une modulation d'amplitude (18) du premier signal (11) et du deuxième signal (12) et la modulation d'amplitude (18) étant utilisée pour déterminer la fonctionnalité de l'amplificateur de réception (10).

10. Dispositif selon la revendication 9 fonctionnant selon un procédé selon les revendications 1 à 8.
